(19) Europäisches Patentamt
European Patent Office
Office européen des brevets

(11) Publication number: **0 184 546**
**A1**

# (12) EUROPEAN PATENT APPLICATION

(21) Application number: 85810396.3

(22) Date of filing: 02.09.85

(51) Int. Cl.[4]: C 07 C 131/00
A 01 N 35/10, C 07 C 83/00
C 07 C 149/24, C 07 C 149/42

(30) Priority: 13.09.84 US 649875

(43) Date of publication of application:
11.06.86 Bulletin 86/24

(84) Designated Contracting States:
AT BE CH DE FR GB IT LI NL

(71) Applicant: SANDOZ AG
Lichtstrasse 35
CH-4002 Basel(CH)

(84) Designated Contracting States:
BE CH FR GB IT LI NL

(71) Applicant: SANDOZ-PATENT-GMBH
Humboldtstrasse 3
D-7850 Lörrach(DE)

(84) Designated Contracting States:
DE

(71) Applicant: SANDOZ-ERFINDUNGEN
Verwaltungsgesellschaft m.b.H.
Brunner Strasse 59
A-1235 Wien(AT)

(84) Designated Contracting States:
AT

(72) Inventor: Henrick, Clive Arthur
3177 Manchester Ct.
Palo Alto Calif. 94303(US)

## (54) Oximes or hydroxylamine-ethers and their use as pesticides.

(57) The invention relates to novel compounds of formula I

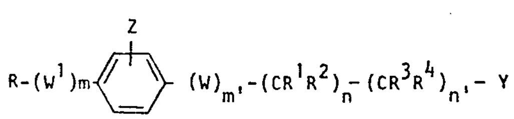

I

wherein the symbols have the significances given in the description, the synthesis thereof and to the use of compounds of formula I for the control of pests such as insects, mites and ticks.

EP 0 184 546 A1

NOVEL AROMATIC COMPOUNDS

This invention relates to novel substituted oximes and hydroxylamine ethers, intermediates therefor, synthesis thereof, and the use of the compounds for the control of pests.

More particularly, the compounds of the present invention are represented by formula I

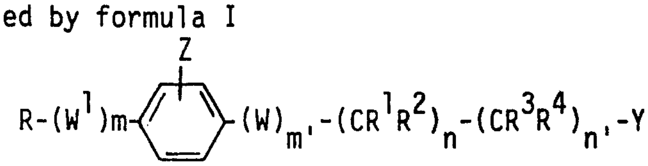

I

wherein

each of m and m' is independently 0 or 1;

each of n and n' is independently 0, 1, 2 or 3;

R is H, $C_{1-8}$alkyl, $C_{2-8}$alkenyl, $C_{2-8}$alkynyl, $C_{1-8}$haloalkyl, $C_{2-8}$haloalkenyl, $C_{2-8}$haloalkynyl, $C_{2-10}$alkoxyalkyl, $C_{2-10}$alkylthioalkyl, $C_{3-8}$cycloalkyl, $C_{3-8}$halocycloalkyl, $C_{4-12}$cycloalkylalkyl, heterocycloalkyl or heterocycloalkylalkyl;

Y is a group

$CR^5{=}N{-}O{-}R^7$ (A),

$CR^5R^6{-}O{-}N{=}CR_a^7R^8$ (B),

$CHR^5{-}NH{-}O{-}R^7$ (C),

or $CR^5R^6{-}O{-}NH{-}CHR_a^7R^8$ (D);

W is O, S, $NR^9$ or CO;

$W^1$ is O, S, SO, $SO_2$, $NR^9$ or CO;

Z is H, $C_{1-8}$alkyl, $C_{1-8}$haloalkyl or halogen

each of $R^1$, $R^2$, $R^3$, $R^4$, $R^5$, $R^6$ and $R^9$ is independently H or $C_{1-8}$alkyl,

provided that:

1) when n is 1 and n' is zero, then $R^1$ and $R^5$ can together form an alkylene ring of two to four carbon atoms, or 2) when each of n and n' is one, then either $R^1$ and $R^3$ or $R^3$ and

$R^5$ or $R^1$ and $R^5$ can together form an alkylene ring of two to four carbon atoms;

each of $R^7$, $R_a^7$ and $R^8$ is independently H, $C_{1-8}$alkyl, $C_{1-8}$-haloalkyl, $C_{2-8}$alkenyl, $C_{2-8}$alkenyl, $C_{2-8}$alkynyl, $C_{1-8}$-alkoxy, $C_{1-8}$alkylthio, $C_{2-10}$alkoxyalkyl, $C_{2-10}$alkylthio-alkyl, pyridyl, furyl, thienyl, phenyl or phenyl mono-, di- or trisubstituted by a group selected from $C_{1-8}$alkyl, $C_{1-8}$haloalkyl, $C_{1-8}$alkoxy, $C_{1-8}$haloalkoxy, halogen, $NO_2$, CN and $C_{1-8}$alkylthio,

$R_a^7$ and $R^8$ together form a saturated or unsaturated 5- or 6-membered ring containing from zero to two oxygen or sulfur atoms.

The terms $C_{1-8}$haloalkyl, $C_{2-8}$haloalkenyl, $C_{2-8}$haloalkynyl, $C_{3-8}$-halocycloalkyl and $C_{1-8}$haloalkoxy refer to $C_{1-8}$alkyl, $C_{2-8}$alkenyl, $C_{2-8}$alkynyl, $C_{3-8}$cycloalkyl and $C_{1-8}$alkoxy resp. substituted with one to six halogen, particularly 1 to 3 halogen atoms. The halogen is preferably Cl or F.

The term "heterocycloalkyl" refers to a heterocycloalkyl group, saturated or unsaturated, of two to six carbon atoms and one to three atoms selected from nitrogen, oxygen or sulfur. The term "heterocycloalkylalkyl" refers to a heterocycloalkyl group wherein one hydrogen is replaced by a $C_{1-8}$alkyl group, the total number of carbon atoms being from three to twelve.

Where R is $C_{1-8}$alkyl, $C_{2-8}$alkenyl or $C_{2-8}$alkynyl, it refers particularly to an alkyl, alkenyl or alkynyl group having 2-6, more preferably 4 or 5 carbon atoms; such groups are preferably branched. A particularly preferred alkyl significance of R is 2-butyl. A particularly preferred alkenyl significance of R is 3-methyl-2butenyl (i.e. $CH_3C(CH_3)=CHCH_2$).

The terms alkenyl and alkynyl when used herein refer to such hydrocarbyl groups having 1 or 2, preferably 1, ethylenic bonds or 1 or 2, preferably 1, acetylenic bonds resp.

Preferred compounds of formula I have 1 or more of the following features:

R is preferably $C_{1-8}$alkyl or $C_{2-8}$alkenyl, more preferably $C_{1-8}$-alkyl.

m is preferably 1.

$W^1$ is preferably O.

Z is preferably H.

W is preferably O.

m' is preferably 1.

$R^1$, $R^3$ and $R^5$ are preferably H or $C_{1-8}$alkyl. Where any of $R^1$, $R^3$ or $R^5$ is $C_{1-8}$alkyl it is preferably $C_{1-5}$alkyl, more preferably $CH_3$.

$R^2$, $R^4$ and $R^6$ are preferably H.

Y is preferably a group (A) or (B).

n is preferably 1.

n' is preferably 1 or 0, more preferably 0.

$R^7$ is preferably $C_{1-8}$alkyl, more preferably $C_{1-5}$alkyl, particularly $C_2H_5$.

$R_a^7$ is preferably $C_{1-8}$alkyl, more preferably $C_{1-5}$alkyl, particularly $C_{1-2}$alkyl.

$R^8$ is preferably H or $C_{1-8}$alkyl, more preferably H or $C_{1-5}$alkyl, preferably H or $C_{1-2}$alkyl.

The compounds of formula I may be obtained according to methods known per se for the preparation of oximes and hydroxylamines.

Such methods comprise:

a) obtaining a compound of formula Ia

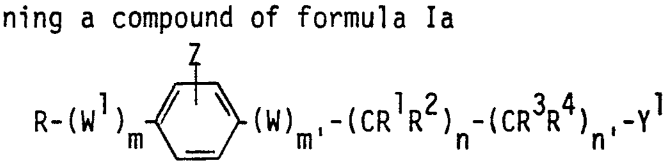

Ia

wherein m, m', n, n', R, $W^1$, Z, W, $R^1$, $R^2$, $R^3$ and $R^4$ are as defined above and

$Y^1$ is a group (A) or (B) as defined above;

by reacting an hydroxylamine ether of formula II or III

$$H_2NOR^7 \qquad (II)$$

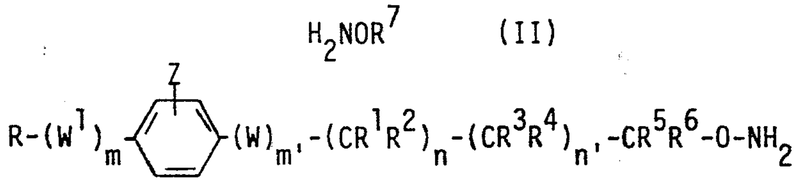 III

wherein $R^7$, m, m', n, n', R, $W^1$, Z, W, $R^1$, $R^2$, $R^3$, $R^4$, $R^5$ and $R^6$ are as defined above,

with an aldehyde or ketone of formula IV or V resp.

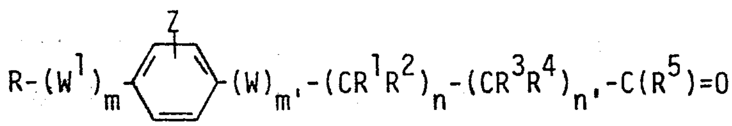 IV

$$O{=}CR_a^{\ 7}R^8 \qquad V$$

wherein m, m', n, n', R, $W^1$, Z, W, $R^1$, $R^2$, $R^3$, $R^4$, $R^5$, $R_a^{\ 7}$ and $R^8$ are as defined above;

b) obtaining a compound of formula Ib

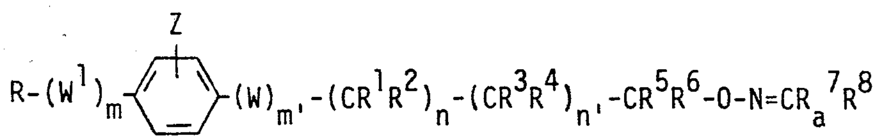 Ib

wherein m, m', n, n', R, $W^1$, Z, W, $R^1$, $R^2$, $R^3$, $R^4$, $R^5$, $R^6$, $R_a^{\ 7}$ and $R^8$ are as defined above,

by reacting a compound of formula VI

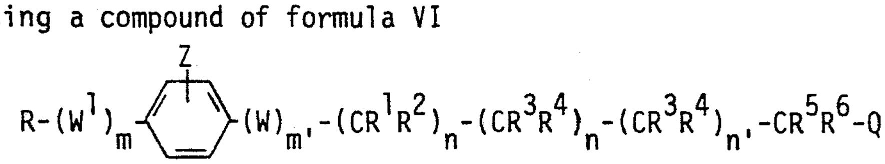 VI

wherein m, m', n, n', R, $W^1$, Z, W, $R^1$, $R^2$, $R^3$, $R^4$, $R^5$ and $R^6$ are as defined above,

and Q is halogen or an equivalent reactive leaving group,

with a compound of formula VII

$$HO{-}N{=}CR_a^{\ 7}R^8 \qquad VII$$

wherein $R_a^{\ 7}$ and $R^8$ are as defined above;

c) obtaining a hydroxylamine ether of formula Ic

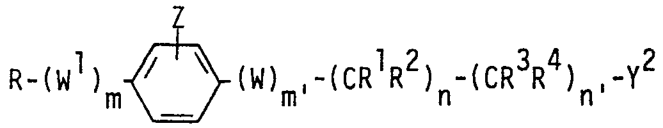 Ic

wherein m, m', n, n', R, $W^1$, Z, W, $R^1$, $R^2$, $R^3$ and $R^4$ are as defined above, and

$Y^2$ is a group (C) or (D) as defined above,

by reduction of a corresponding oxime of formula Ia, as defined above, and oxydizing, where desired, a compound of formula I wherein $W^1$ is sulfur to a corresponding sulfinyl or sulfonyl compound.

Process a) can be carried out under the conditions known for the preparation of oximes by reaction of ketones or aldehydes with O-substituted hydroxylamines. It is conveniently effected in a solvent which is inert under the reaction conditions, e.g. an ether such as dioxane and in the presence of a base such as pyridine. The reaction can be carried out at room temperature or above.

Process b) can be carried out under the conditions known for the O-alkylation of oximes by halides or equivalents thereof such as mesylates. The oxime is conveniently reacted in salt form, e.g. in alkalimetal salt form. The reaction is advantageously carried out in a solvent which is inert under the reaction conditions such as N-methylpyrrolidone, dimethylformamide, tetrahydrofuran and the like. A suitable reaction temperature is room temperature or below.

Process c) can be carried out under the reducing conditions known for the preparation of hydroxylamine ethers from oximes. Suitable reduction agents are for example sodium cyanoborohydride as described in (Tetrahedron Letters 29 2493-2496 (1974), and pyridine-borane in acid media, such as ethanol-10% aqueous HCl or 20% ethanolic hydrogen chloride (as described in Ventron Alembic, Issue # 29 (1983).

Compounds of formula I where $W^1$ is sulfinyl may be prepared by reacting a corresponding compound of formula I where $W^1$ is sulfur with one equivalent of sodium periodate or m-chloroperbenzoic acid in a

solvent such as methanol or methylene chloride. Compounds of formula I where $W^1$ is sulfonyl are prepared in the same manner, except that two equivalents of m-chloroperbenzoic acid are used. Alternatively, either hydrogen peroxide in warm acetic acid or excess hydrogen peroxide with selenium dioxide may be used as the oxidant.

The compounds of formula I may be recovered from the reaction mixture in which they are formed by working up by established procedures

The compounds of the formula I can have one or more asymmetric centers and/or geometric isomers. The present invention includes each of the stereo isomers and the mixtures of stereo isomers thereof. In the examples hereinafter, unless otherwise specified, the compound is a mixture of stereo isomers.

The starting materials and reagents employed in the processes described above are either known or, insofar as they are not known, may be produced in analogous manner to the processes described herein or to known processes.

The compounds of formula I show interesting activity against a wide range of pests, such as fleas (Ctenocephalides felis), ticks, flies (Musca domestica), cockroaches, Blattella germanica, eggs of Spodoptera species etc. In view of their interesting activity the compounds can be effective control agents for insects of, for example, the orders Lepidoptera, Hemiptera, Homoptera, Coleoptera, Diptera, Orthoptera, and Siphonaptera, and other insects, mites and ticks of the class Acari, including mites of the families Tetranychidae or Tarsonemidae and ticks of the families Argasidae and Ixodidae.

The optimum usage of a compound of formula I is readily determined by a person of ordinary skill in the art using routine laboratory testing. Usually satisfactory results are obtained with a test amount of the order of 0.1 µg to 100 µg per insect, mite or tick, depending on the mode and conditions of application as well as on the pest involved.

They are preferably applied to the immature insect, namely during the egg, embryo, larval prepupal stage, in view of their effect on metamorphosis and otherwise abnormal development leading to death or inability to reproduce. For many of the compounds of formula I the effective application rate is equivalent to or below that known for commercially available IGR compounds such as methoprene, hydroprene etc. In view of their interesting pest controlling effect the compounds of formula I are indicated for use in i.a. crop protection, forest protection, stored grain protection, cattle and pet protection, against cockroaches etc.

Application of a compound of formula I is made according to conventional procedures, involving the application to the pest (insects, mites, ticks) or their locus of a pest controlling amount of a compound of formula I.

The compounds of formula I are conveniently employed in pest controlling composition form in association with a diluent.

Such compositions also form part of the present invention. They may contain, aside from a compound of formula I as active agent, other active agents, such as insecticides (e.g. synthetic pyrethroids, carbamates, phosphates), insect growth regulators or insect attractants. They may be employed in either solid or liquid forms e.g. in the form of a wettable powder or an emulsifiable concentrate incorporating conventional diluents. Such compositions may be produced in conventional manner, e.g. by mixing the active ingredient with a diluent and optionally other formulating ingredients such as surfactants.

The term diluents as used herein means any liquid or solid agriculturally acceptable material which may be added to the active constituent to bring it in an easier or improved applicable form, respectively to a usable or desirable strength of activity. It can for example be talc, kaolin, diatomaceous earth, xylene, or water.

Particularly formulations to be applied in spraying forms such as water dispersible concentrates or wettable powders may contain surfactants such as wetting and dispersing agents, e.g. the condensation product of formaldehyde with naphthalene sulphonate, an alkylarylsulphonate, a lignin sulphonate, a fatty alkyl sulphate, an ethoxylated alkylphenol and an ethoxylated fatty alcohol.

In general, the formulations include from 0.01 to 90% by weight of active agent from 0 to 20% by weight of agriculturally acceptable surfactant and 99.99 to 10% by weight (solid or liquid) diluent(s), the active agent consisting either of at least one compound of formula I or mixtures thereof with other active agents. Concentrate forms of compositions generally contain between about 2 and 90%, preferably between about 5 and 65% by weight of active agent. Application forms of formulations may for example contain from 0.01 to 25 % by weight, preferably from 0.01 to 5% by weight of active agent or more diluted forms thereof: they include sprays, foggers, baits, encapsulated form, cyclodextrin inclusion complexes, insect disks, pet collars, ear tags, insect bolus and the like.

The following examples are provided to illustrate the practice of the present invention. Temperatures are given in degrees centigrade and parts and percentages are by weight. RT means room temperature.

Composition Example

Emulsifiable Concentrate

65 Parts of a compound of formula I, e.g. compound 56 hereinafter given, are mixed with 8 parts of an emulsifier (e.g. 4 parts of Atlox 3404 F and 4 parts of Atlox 848, which are mixtures of anionic and non-ionic emulsifiers of ICI America) and 27 parts of an organic solvent (e.g. xylene or Tenneco 500-100, which is a mixture of trimethyl benzene and xylene solvents of Tenneco Corporation) are thoroughly mixed until a homogenous solution is obtained.

**EXAMPLE 1** : 4-(1-Methylpropoxy)-phenoxyacetaldehyde O-ethyloxime

To a mixture of 4-(1-methylpropoxy)phenoxyacetaldehyde (0.68 g, 3.3 mmol) and pyridine (0.50 g, 6.3 mmol) in 5 ml of p-dioxane is added a solution of ethoxyamine hydrochloride (0.60 g, 6.2 mmol) in a minimum amount of water. The reaction mixture is stirred at RT for 5 hours, after which the dioxane is removed in vacuo. The residue is taken up in ether and the organic layer is washed with water. The aqueous phase is extracted with ether, and the combined organic phases are dried, the solvent is removed in vacuo and the product is purified by column chromatography to give the title compound as a mixture of syn and anti stereo isomers. MS m/e 251 ($M^+$) (compound 1).

NMR ($CDCl_3$) $\delta$ 1.0-2.0 (m, 11 H, $C\underline{H}_3$-$C\underline{H}_3$-$C\underline{H}_2$-CH($C\underline{H}_3$)-O, O-$CH_2$-$C\underline{H}_3$),
3.8-4.5 (m, 5 H, $C\underline{H}(CH_3)$-O, O-$C\underline{H}_2$-CH=N, O-$C\underline{H}_2$-$C\underline{H}_3$),
6.8 (s, 4 H, aromatic) and 8.3 ppm (m, 1 H, $C\underline{H}$=N).

**EXAMPLE 2** : 2-Methylpropionaldehyde O-{2-[4-(1-methylpropoxy)phenoxypropyl}oxime

A mixture of 2-methyl-2-[4-(1-methylpropoxy)phenoxy]ethoxyamine (0.5 g), 2-methylpropionaldehyde (0.2 g) and three drops of concentrated HCl in 10 ml of dioxane is stirred at RT for 2.5 hours. The solvent is then removed by rotoevaporation, and the residue is purified by column chromatography to give the title compound. MS m/e 293.4 ($M^+$), compound 74.

NMR ($CDCl_3$) $\delta$ 0.8-2.4 (m, 18 H), 3.7-4.5 (m, 4 H), 6.8 (s, 4 H, aromatic) and 6.3-7.1 ppm (d, 1 H), N=$C\underline{H}$).

**EXAMPLE 3** : Acetone O-{1-methyl-2-[4-(1-methylpropoxy)-phenoxy]ethyl} oxime

To pentane-washed sodium hydride (0.055 g, 2.3 mmol) in 5 ml of dimethylformamide (DMF), under $N_2$ and below 5°, is added, dropwise and with stirring, acetone oxime (0.16 g, 2.2 mmol) in 5 ml of DMF. The mixture is warmed to RT and is stirred at RT for 2.5 hours, after which 1-methyl-2-[4-(1-methylpropoxy)phenoxy]ethyl methanesulfonate (0.50 g, 1.6 mmol) in 5 ml of DMF is added. The reaction mixture is stirred at RT for 18 hours, after which it is poured into water and extracted

with ether. The combined organic extracts are washed with water and with brine and dried, solvent is evaporated off and the product is purified by column chromatography to give the title compound, MS m/e 279 ($M^+$), compound 26.

NMR ($CDCl_3$) $\delta$ 0.8-1.7 (m, 11 H, $C\underline{H}_3$-$C\underline{H}_2$-CH($C\underline{H}_3$)-O, O-$CH_2$-CH($C\underline{H}_3$)-O), 1.9 (s, 6. H, N=C($C\underline{H}_3$)$_2$), 3.8-4.6 (m, 4 H, $C\underline{H}$($CH_3$)-O, O-$C\underline{H}_2$-$C\underline{H}$-($CH_3$)-O) and 6.8 ppm (s, 4 H, aromatic).

**EXAMPLE 4 :**

The following compounds of formula I are obtained according to the procedure of Example 1 or 2 by reaction of an aldehyde or ketone of formula IV or V with an hydrochloride of an hydroxylamine ether of formula II or III resp.

Cmpd.

1. 4-(1-Methylpropoxy)-phenoxyacetaldehyde O-ethyloxime
2. 4-(1-Methylpropoxy)phenoxyacetone O-ethyloxime,
   MS m/e 265 ($M^+$)
3. 4-[4-(1-methylpropoxy)phenoxy]-2-butanone O-ethyloxime
4. 4-[4-(1-methylpropoxy)phenoxy]-2-pentanone O-ethyloxime
5. 1-[4-(1-methylpropoxy)phenoxy]-2-butanone O-ethyloxime
6. 4-(3-methyl-2-butenoxy)phenoxyacetone O-ethyloxime
7. 4-(1-methylbutoxy)phenoxyacetone O-ethyloxime
8. 4-(3-methoxy-3-methylbutoxy)phenoxyacetone O-ethyloxime
9. 4-(3-chloro-2-propenoxy)phenoxyacetone O-ethyloxime
10. 4-cyclobutoxyphenoxyacetone O-ethyloxime
11. 4-(1-methylpropylthio)phenoxyacetone O-ethyloxime
12. 4-(1-methylpropylthio)phenylthioacetone O-ethyloxime
13. 2-fluoro-4-(1-methylpropoxy)phenoxyacetone O-ethyloxime
14. 3-chloro-4-(1-methylpropoxy)phenoxyacetone O-ethyloxime
15. 3-methyl-4-(1-methylpropoxy)phenoxyacetone O-ethyloxime
16. 5-trifluoromethyl-4-(1-methylpropoxy)phenoxyacetone
    O-ethyloxime
17. 2-[4-(1-methylpropoxy)phenoxy]propionaldehyde O-ethyloxime
    MS m/e 265.4 ($M^+$)
18. 4-(1-methylpropoxy)phenoxyacetone O-allyloxime
19. 4-(1-methylpropoxy)phenoxyacetone O-propargyloxime
20. 4-(1-methylpropoxy)phenoxyacetone O-(4-chlorophenyl)oxime

Cmpd.

21. 4-(1-methylpropoxy)phenoxyacetone O-(2-pyridyl)oxime

22. 4-(1-methylpropoxy)phenoxyacetone O-(2,2-difluoroethyl)-oxime

23. 4-(1-methylpropoxy)phenoxyacetone O-(2-furyl)oxime

24. 4-(1-methylpropoxy)phenoxyacetone O-(2-thienyl)oxime

25. 4-[4-(1-methylpropoxy)phenyl]-2-butanone O-ethyloxime (mixture of syn and anti isomers). MS m/e 263 ($M^+$)

26. Acetone O-{1-methyl-2-[4-(1-methylpropoxy)phenoxy]-ethyl oxime MS m/e 279 ($M^+$)

27. Acetaldehyde O- 1-methyl-2-[4-(1-methylpropoxy)-phenoxy]-ethyl oxime MS m/e 265 ($M^+$)

28. 3-buten-2-one O-{1-methyl-2-[4-(1-methylpropoxy)phenoxy]-ethyl}oxime

29. 3-butyn-2-one O-{1-methyl-2-[4-(1-methylpropoxy)phenoxy]-ethyl}oxime

30. 1,4-pentadien-3-one O-{1-methyl-2-[4-(1-methylpropoxy)-phenoxy]ethyl}oxime

31. 2-butanone O-{1-methyl-2-[4-(1-methylpropoxy)phenoxy]-ethyl}oxime ; isomers, MS m/e 293.4 ($M^+$)

32. 3-pentanone O-{1-methyl-2-[4-(1-methylpropoxy)phenoxy]-ethyl}oxime ; isomers, MS m/e 307.4 ($M^+$)

33. acetophenone O-{1-methyl-2-[4-(1-methylpropoxy)phenoxy]-ethyl}oxime

34. 1-(2-pyridyl)-1-propanone O-{1-methyl-2-[4-(1-methyl-propoxy)phenoxy]ethyl}oxime

Cmpd.

35. 1-(2-furyl)-1-propanone O-{1-methyl-2-[4-(1-methylpropoxy)-phenoxy]ethyl}oxime

36. 1-(2-thienyl)-1-propanone O-{1-methyl-2-[4-(1-methylpropoxy)-phenoxy]ethyl}oxime

37. benzophenone O-{1-methyl-2-[4-(1-methylpropoxy)phenoxy]-ethyl}oxime

38. cyclohexanone O-{1-methyl-2-[4-(1-methylpropoxy)phenoxy]-ethyl}oxime

39. acetone O-{1-methyl-2-[4-(3-methyl-2-butenoxy)phenoxy]-ethyl}oxime

40. acetone O-{1-methyl-2-[4-(1-methylbutoxy)phenoxy]ethyl}-oxime

41. acetone O-{1-methyl-2-[4-(3-methoxy-3-methylbutoxy)-phenoxy]ethyl}oxime

42. acetone O-{1-methyl-2-[4-(3-chloro-2-propenoxy)phenoxy]-ethyl}oxime

43. acetone O-[1-methyl-2-(4-cyclobutoxyphenoxyethyl]oxime

44. acetone O-{1-methyl-2-[4-(1-methylpropylthio)phenoxy]-ethyl}oxime

45. acetone O-{1-methyl-2-[4-(1-methylpropylthio)pyenylthio]-ethyl}oxime

46. acetone O-{1-methyl-2-[2-fluoro-4-(1-methylpropoxy)-phenoxy]ethyl}oxime

Cmpd.

47. acetone O-{1-methyl-2-[3-methyl-4-(1-methylpropoxy)-phenoxy]ethyl}oxime

48. acetone O-{1-methyl-2-[4-(1-methylpropoxy)-5-trifluoromethylphenoxy]ethyl}oxime

49. acetone O-{1-methyl-3-[4-(1-methylpropoxy)phenoxy]-propyl}oxime, MS m/e 293.4 ($M^+$)

50. acetone O-{3-[4-(1-methylpropoxy)phenoxy]-butyl}oxime

51. acetone O-{1-ethyl-2-[4-(1-methylpropoxy)phenoxy]-ethyl}oxime

52. acetone O-{1-methyl-3-[4-(1-methylpropoxy)phenoxy]-butyl}oxime

53. acetone O-{2-[4-(1-methylpropoxy)phenoxy]propyl}-oxime

54. acetone O-{1-methyl-2-[4-(1-methylpropoxy)phenoxy]-propyl}oxime, MS m/e 293.4 ($M^+$)

55. acetone O-{2-[4-(1-methylpropoxy)phenoxy]cyclohexyl}oxime

56. propionaldehyde O-{2-[4-(1-methylpropoxy)phenoxy]ethyl}-oxime, MS m/e 265.4 ($M^+$)

57. propionaldehyde O-{2-[4-(1-methylpropoxy)phenoxy]-propyl}oxime, MS m/e 279.4 ($M^+$)

58. propionaldehyde O-{1-methyl-2-[4-(1-methylpropoxy)phenoxy ethyl}oxime, MS m/e 279.4 ($M^+$) (Isomers)

59. propionaldehyde O-{1-methyl-2-[4-(1-methylpropoxy)-phenoxy]propyl}oxime

Cmpd.

60. propionaldehyde O-{3-[4-(1-methylpropoxy)phenoxy-butyl}oxime

61. propionaldehyde O-{1-methyl-3-[4-(1-methylpropoxy)phenoxy]-propyl}oxime ; MS m/e 293.4 ($M^+$)

62. propionaldehyde O-{2-[4-(1-methylpropoxy)phenoxy]cyclo-hexyl}oxime

63. propionaldehyde O-{2-[4-(3-methyl-2-butenoxy)phenoxy]ethyl}-oxime

64. propionaldehyde O-{ 2-[4-(3-methyl-2-butenoxy)-phenoxy] propyl}oxime

65. propionaldehyde O-{ 2-[4-(1-methylbutoxy)phenoxy]-propyl}oxime

66. propionaldehyde O-{ 2-[4-(3-methoxy-3-methylbutoxy)-phenoxy] propyl}oxime

67. propionaldehyde O-[ 2-(4-cyclobutoxyphenoxy)propyl]-oxime

68. propionaldehyde O-{ 2-[4-(1-methylpropylthio)phenoxy]-propyl}oxime

69. propionaldehyde O-{ 2-[4-(3-methyl-2-butenylthio)-phenoxy] propyl}oxime

70. propionaldehyde O-{ 2-[2-fluoro-4-(1-methylpropoxy)-phenoxy] propyl}oxime

Cmpd.

71. 3-pentanone O-{2-[4-(1-methylpropoxy)phenoxy]ethyl}oxime,

72. 3-pentanone O-{2-[4-(1-methylpropoxy)phenoxy]-propyl oxime.

73. 3-pentanone O- 2-[4-(3-methyl-2-butenoxy)phenoxy]-propyl -oxime

74. 2-methylpropionaldehyde O-{2-[4-(1-methylpropoxy)phenoxy]-propyl}oxime. MS m/e 293.4 ($M^+$)

75. 4-(1-methylpropylsulfinyl)phenoxyacetone O-ethyloxime

76. 4-(1-methylpropylsulfonyl)phenoxyacetone O-ethyloxime

EXAMPLE 5

Following the procedure of Example 3 the above identified compounds 26 to 74 are obtained by reaction of a methanesulphonate of formula VI with an oxime of formula VII.

EXAMPLE 6 : N-Ethoxy-1-methyl-3-[4-(1-methylpropoxy)phenyl]-propylamine

To 4-[4-(1-methylpropoxy)phenyl]-2-butanone O-ethyloxime (2.63 g, 10.0 mmol) in 30 ml of ethanol is added sodium cyanoborohydride (2.00 g, 38.1 mmol) and methanolic 2N HCl is added throughout the reaction to maintain pH at 3. The reaction temperature is maintained at 15-20°. After ca. 2 hours, the solvent is removed under vacuum. The mixture is made basic by the addition of 10% sodium hydroxide, followed by water and ether, and is extracted with ether. The combined organic phases are washed with water and with brine, dried and filtered and the solvent is removed *in vacuo* to give the title compound MS m/e 265 ($M^+$), compound 77.

EXAMPLE 7 : 4-(1-methylpropylsulfinyl)phenoxyacetone O-ethyloxime

To a solution of 4-(1-methylpropylthio)phenoxyacetone O-ethyloxime (7.1 mmol) in 10 ml of methanol at 0° is added, dropwise over 5 min., sodium periodate (1.67 g, 7.8 mmol) in 13 ml of water. The mixture is stirred for 3 hours while warming to RT. The reaction is worked up by addition of water and extraction with ether. The combined organic extracts are washed with saturated sodium thiosulfate, with water and with brine, dried and solvent evaporated off to give the title compound, compound 75.

EXAMPLE 8 : 4-(1-methylpropylsulfonyl)phenoxyacetone O-ethyloxime

7.1 mmol of 4-(1-methylpropylthio)phenoxyacetone O-ethyloxime is reacted with 15.6 mmol of m-chloroperbenzoic acid in chloroform to yield the title compound (compound 76). Alternatively, either hydrogen peroxide in warm acetic acid or excess hydrogen peroxide and selenium dioxide in methanol is used as the oxidant.

A selection of the above mentioned compounds have been characterised by NMR as follows:

| Cmpd. | |
|---|---|
| 2 | NMR ($CDCl_3$) δ 0.8-1.8 (m, 11 H, $C\underline{H}_3$-$C\underline{H}_2$-CH($C\underline{H}_3$)-O, O-$CH_2$-$C\underline{H}_3$), 2.0 (s, 3H, C($C\underline{H}_3$)=N), 3.9-4.8 (m, 5 H, C$\underline{H}$($CH_3$)-O, O-$C\underline{H}_2$-C($CH_3$)=N, O-$C\underline{H}_2$-$CH_3$) and 6.8 ppm s, 4 H, aromatic). |
| 17 | NMR $CDCl_3$) δ 0.84-1.6 (m, 14H), 3.92-4.88 (m, 4H), 6.84 (s, 4 H, aromatic) and 7.27 ppm (s, 1 H, C$\underline{H}$ = N). |
| 25 | NMR ($CDCl_3$) δ 1.14-1.63 (t, d, overlapped, CH($C\underline{H}_3$)-O, N-O-$CH_2$-$C\underline{H}_3$), 1.56 (t, J = 7.69, $C\underline{H}_3$ -$CH_2$-CH($CH_3$)-O), 1.77, 1.83 (s, 3 H, C($C\underline{H}_3$)=N), 2.45-2.67 (m, 4 H, $C\underline{H}_2$-$C\underline{H}_2$-C($CH_3$)=N), 3.95-4.26 (m, 3 H, C$\underline{H}$($CH_3$)-O, O-$C\underline{H}_2$-$CH_3$) and 6.74-7.12 ppm (m, 4 H, aromatic). |

| Cmpd. | |
|---|---|
| 27 | NMR ($CDCl_3$) δ 0.8-1.8 (m, 14H), 3.9-4.5 (m, 4H), 6.9 (s, 4H, aromatic) and 7.5 ppm (q, 1H, N=C<u>H</u>). |
| 31 | NMR ($CDCl_3$) δ 0.78-1.64 (m, 14 H), 1.70 (s, 3H, ($CH_3$)C=N), 1.94-2.20 (q, 2H, $CH_2C(CH_3)=N$), 3.68-4.40 (m, 4H) and 6.74 ppm (s, 4H, aromatic). |
| 32 | NMR ($CDCl_3$) δ 0.84.1.88 (m, 17H), 2.08-2.51 (m, 4H $(CH_3CH_2)_2C=N$), 3.80-4.60 (m, 4H) and 6.82 ppm (s, 4H, aromatic). |
| 49 | NMR ($CDCl_3$) δ 0.88-1.88 (t, 3H, J=9Hz), 1.88-1.90 (ss, 6H, $(CH_3)_2C=N$), 0.88-2.28 (m, 10H), 3.96-4.28 (m,4H) and 6.82 ppm (s, 4H, aromatic). |
| 54 | NMR ($CDCl_3$) δ 0.96 (t, 3H, J=7.2HZ), 1.08-1.90 (m, 11H), 1.81 (ss, 6H, $(CH_3)_2C=N$), 4.0-4.50 (m, 3H, $OCH(CH_3)CH$-$(CH_3)O$, $OCH(CH_3)CH_2CH_3$) and 6.80 ppm (s, 4H, aromatic) |
| 56 | NMR ($CDCl_3$) δ 0.8-1.8 (m, 11H), 2.0-2.5 (m, 2H), 3.8-4.6 (m, 5H), 6.8 (s, 4H, aromatic), 6.6-7.4 ppm (t, 1H, CH=N). |
| 57 | NMR ($CDCl_3$) δ 0.8-1.8 (m, 14H), 2.0-2.5 (q, 2H, $CH_2CH=N$), 4.0-4.7 (m, 4H), 6.8 (s, 4H, aromatic) and 6.6-7.4 ppm (t, 1H, CH=N). |
| 58 | NMR ($CDCl_3$) δ 0.84-1.81 (m, 14H), 2.16-2.48 (m, 2H, $CH_2CH=N$), 3.80-4.62 (m, 4H), 6.48-6.64 (t, 1H, J=5.4Hz, CH=N) and 6.83 ppm (s, 4H, aromatic). |
| 61 | NMR ($CDCl_3$) δ 0.96-2.40 (m, 16H), 3.96-4.56 (m, 4H), 6.80 (s, 4H, aromatic) and 7.36 ppm (t, 1H, J=5.4Hz, CH=N). |
| 77 | NMR ($CDCl_3$) δ 0.80-1.35 (d and t overlapped, 12 H, $CH_3$-$CH_2CH(CH_3)$-O, $CH(CH_3)$-NH, O-$CH_2$-$CH_3$), 1.35-2.03 (m, 4H, $CH_3$-$CH_2$-$CH(CH_3)$-O, $CH_2$-$CH_2$-CH-$(CH_3)$-NH), 2.59 (t, J=8.35, 2H, $CH_2$-$CH_2$-$CH(CH_3)$-NH), 2.80-3.25 (m, 1H, $CH(CH_3)$-NH), 3.71 (q, J=6.82, 2 H, O-$CH_2$-$CH_3$), 4.08-4.23 (m, 1H, $CH(CH_3)$-O), 5.16 (s, NH) and 6.75-7.15 ppm (m, 4H, aromatic). |

133-0606

Claims

1. Compounds of formula I

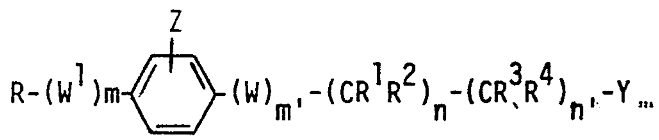

I

wherein

each of m and m' is independently 0 or 1;

each of n and n' is independently 0, 1, 2 or 3;

R is H, $C_{1-8}$alkyl, $C_{2-8}$alkenyl, $C_{2-8}$alkynyl, $C_{1-8}$haloalkyl, $C_{2-8}$haloalkenyl, $C_{2-8}$haloalkynyl, $C_{2-10}$alkoxyalkyl, $C_{2-10}$alkylthioalkyl, $C_{3-8}$cycloalkyl, $C_{3-8}$halocycloalkyl, $C_{4-12}$cycloalkylalkyl, heterocycloalkyl or heterocycloalkylalkyl;

Y is a group

$CR^5=N-O-R^7$ (A),

$CR^5R^6-O-N=CR_a^7R^8$ (B),

$CHR^5-NH-O-R^7$ (C),

or $CR^5R^6-O-NH-CHR_a^7R^8$ (D);

W is O, S, $NR^9$ or CO;

$W^1$ is O, S, SO, $SO_2$, $NR^9$ or CO;

Z is H, $C_{1-8}$alkyl, $C_{1-8}$haloalkyl or halogen

each of $R^1$, $R^2$, $R^3$, $R^4$, $R^5$, $R^6$ and $R^9$ is independently H or $C_{1-8}$alkyl,

provided that:

1) when n is 1 and n' is zero, then $R^1$ and $R^5$ can together form an alkylene ring of two to four carbon atoms, or 2) when each of n and n' is one, then either $R^1$ and $R^3$ or $R^3$ and

$R^5$ or $R^1$ and $R^5$ can together form an alkylene ring of two to four carbon atoms;
each of $R^7$, $R_a^7$ and $R^8$ is independently H, $C_{1-8}$alkyl, $C_{1-8}$-haloalkyl, $C_{2-8}$alkenyl, $C_{2-8}$alkenyl, $C_{2-8}$alkynyl, $C_{1-8}$-alkoxy, $C_{1-8}$alkylthio, $C_{2-10}$alkoxyalkyl, $C_{2-10}$alkylthio-alkyl, pyridyl, furyl, thienyl, phenyl or phenyl mono-, di- or trisubstituted by a group selected from $C_{1-8}$alkyl, $C_{1-8}$haloalkyl, $C_{1-8}$alkoxy, $C_{1-8}$haloalkoxy, halogen, $NO_2$, CN and $C_{1-8}$alkylthio,
$R_a^7$ and $R^8$ together form a saturated or unsaturated 5- or 6-membered ring containing from zero to two oxygen or sulfur atoms.

2. A compound according to Claim 1, wherein Y is a group (A) or (B).

3. A compound according to Claim 1 or 2, wherein R is $C_{1-8}$alkyl or $C_{2-8}$alkenyl; m, m' and n are 1; n' is 0; W and W' are O and Z is H.

4. A compound according to Claim 3, wherein $R^1$, $R^3$ and $R^5$ are H or $C_{1-8}$alkyl; $R^2$, $R^4$ and $R^6$ are H.

5. A compound according to Claim 4, wherein $R^7$ or $R_a^7$ is $C_{1-8}$alkyl and $R^8$ is H or $C_{1-8}$alkyl.

6. A pest controlling composition comprising a compound of any one of Claims 1 to 5 and a diluent.

7. A method for the control of insects and acarids which comprises applying to the pest or its locus a pest controlling amount of a compound of any one of Claims 1 to 5.

Claims

1. A pest controlling composition comprising a compound of formula I

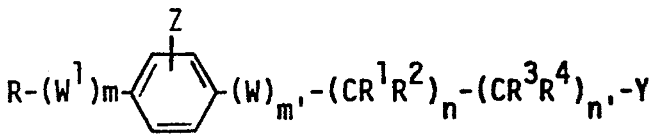

I

wherein

each of m and m' is independently 0 or 1;

each of n and n' is independently 0, 1, 2 or 3;

R is H, $C_{1-8}$alkyl, $C_{2-8}$alkenyl, $C_{2-8}$alkynyl, $C_{1-8}$haloalkyl, $C_{2-8}$haloalkenyl, $C_{2-8}$haloalkynyl, $C_{2-10}$alkoxyalkyl, $C_{2-10}$alkylthioalkyl, $C_{3-8}$cycloalkyl, $C_{3-8}$halocycloalkyl, $C_{4-12}$cycloalkylalkyl, heterocycloalkyl or heterocycloalkylalkyl;

Y is a group

$CR^5{=}N{-}O{-}R^7$ (A),

$CR^5R^6{-}O{-}N{=}CR_a^7R^8$ (B),

$CHR^5{-}NH{-}O{-}R^7$ (C),

or $CR^5R^6{-}O{-}NH{-}CHR_a^7R^8$ (D);

W is O, S, $NR^9$ or CO;

$W^1$ is O, S, SO, $SO_2$, $NR^9$ or CO;

Z is H, $C_{1-8}$alkyl, $C_{1-8}$haloalkyl or halogen

each of $R^1$, $R^2$, $R^3$, $R^4$, $R^5$, $R^6$ and $R^9$ is independently H or $C_{1-8}$alkyl,

provided that:

1) when n is 1 and n' is zero, then $R^1$ and $R^5$ can together form an alkylene ring of two to four carbon atoms, or 2) when each of n and n' is one, then either $R^1$ and $R^3$ or $R^3$ and

$R^5$ or $R^1$ and $R^5$ can together form an alkylene ring of two to four carbon atoms;

each of $R^7$, $R_a^7$ and $R^8$ is independently H, $C_{1-8}$alkyl, $C_{1-8}$-haloalkyl, $C_{2-8}$alkenyl, $C_{2-8}$alkenyl, $C_{2-8}$alkynyl, $C_{1-8}$-alkoxy, $C_{1-8}$alkylthio, $C_{2-10}$alkoxyalkyl, $C_{2-10}$alkylthio-alkyl, pyridyl, furyl, thienyl, phenyl or phenyl mono-, di- or trisubstituted by a group selected from $C_{1-8}$alkyl, $C_{1-8}$haloalkyl, $C_{1-8}$alkoxy, $C_{1-8}$haloalkoxy, halogen, $NO_2$, CN and $C_{1-8}$alkylthio,

$R_a^7$ and $R^8$ together form a saturated or unsaturated 5- or 6-membered ring containing from zero to two oxygen or sulfur atoms.

2. A composition according to Claim 1, wherein Y is a group (A) or (B).

3. A compound according to Claim 1 or 2, wherein R is $C_{1-8}$alkyl or $C_{2-8}$alkenyl; m, m' and n are 1; n' is O; W and W' are O and Z is H.

4. A compound according to Claim 3, wherein $R^1$, $R^3$ and $R^5$ are H or $C_{1-8}$alkyl; $R^2$, $R^4$ and $R^6$ are H.

5. A compound according to Claim 4, wherein $R^7$ and $R_a^7$ is $C_{1-8}$alkyl and $R^8$ is H or $C_{1-8}$alkyl.

6. A process for preparing a compound as defined in any one of Claims 1 to 5, comprising

a) obtaining a compound of formula Ia

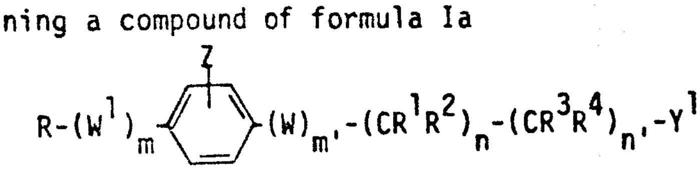

Ia

wherein m, m', n, n', R, $W^1$, Z, W, $R^1$, $R^2$, $R^3$ and $R^4$ are as defined above and

$Y^1$ is a group (A) or (B) as defined above;

by reacting an hydroxylamine ether of formula II or III

$$H_2NOR^7 \qquad (II)$$

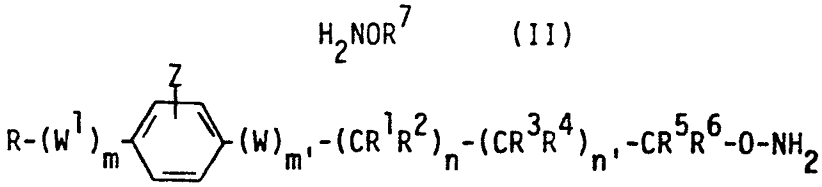 III

wherein $R^7$, m, m', n, n', R, $W^1$, Z, W, $R^1$, $R^2$, $R^3$, $R^4$, $R^5$ and $R^6$ are as defined above,

with an aldehyde or ketone of formula IV or V resp.

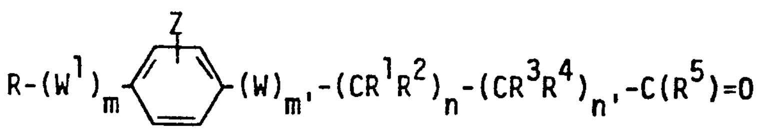 IV

$$O{=}CR_a^{\,7}R^8 \qquad V$$

wherein m, m', n, n', R, $W^1$, Z, W, $R^1$, $R^2$, $R^3$, $R^4$, $R^5$, $R_a^{\,7}$ and $R^8$ are as defined above;

b) obtaining a compound of formula Ib

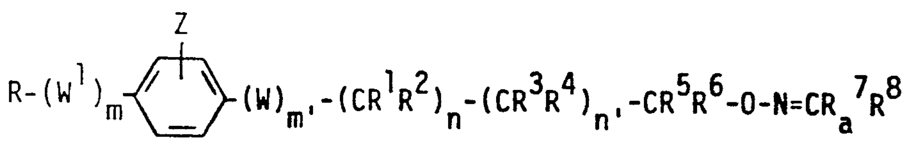 Ib

wherein m, m', n, n', R, $W^1$, Z, W, $R^1$, $R^2$, $R^3$, $R^4$, $R^5$, $R^6$, $R_a^{\,7}$ and $R^8$ are as defined above,

by reacting a compound of formula VI

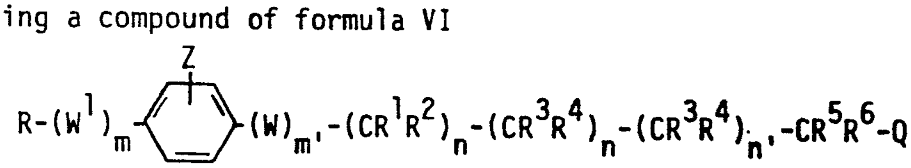 VI

wherein m, m', n, n', R, $W^1$, Z, W, $R^1$, $R^2$, $R^3$, $R^4$, $R^5$ and $R^6$ are as defined above,

and Q is halogen or an equivalent reactive leaving group,

with a compound of formula VII

$$HO{-}N{=}CR_a^{\,7}R^8 \qquad VII$$

wherein $R_a^{\,7}$ and $R^8$ are as defined above;

c) obtaining a hydroxylamine ether of formula Ic

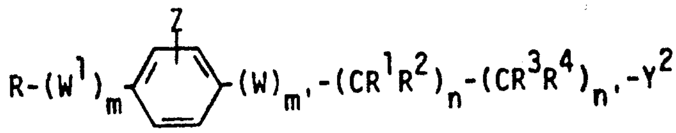 Ic

wherein m, m', n, n', R, $W^1$, Z, W, $R^1$, $R^2$, $R^3$ and $R^4$ are as defined above, and

$Y^2$ is a group (C) or (D) as defined above,

by reduction of a corresponding oxime of formula Ia, as defined above, and oxydizing, where desired, a compound of formula I wherein $W^1$ is sulfur to a corresponding sulfinyl or sulfonyl compound.

7. A method for the control of insects and acarids which comprises applying to the pest or its locus a pest controlling amount of a compound of any one of Claims 1 to 5.

European Patent Office

# EUROPEAN SEARCH REPORT

0184546
Application number

EP 85 81 0396

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 024 747 (BAYER) * claim 1 * | 1 | C 07 C 131/00<br>A 01 N 35/10<br>C 07 C 83/00<br>C 07 C 149/24<br>C 07 C 149/42 |
| | --- | | |
| A | DD-A- 79 738 (GYOGYSZERKUTATO INTEZET) | 1 | |
| | --- | | |
| A | EP-A-0 094 348 (CIBA-GEIGY) | 1 | |
| | --- | | |
| A | EP-A-0 024 888 (MOBIL OIL) | 1 | |
| | --- | | |
| A,P | PATENT ABSTRACTS OF JAPAN, vol. 9, no. 17 (C-262)[1740], 24th January 1985; & JP - A - 59 164 761 (SUMITOMO KAGAKU KOGYO) 17-09-1984 | 1 | |
| | ----- | | |
| | | | TECHNICAL FIELDS SEARCHED (Int Cl 4) |
| | | | A 01 N 35/10<br>C 07 C 83/00<br>C 07 C 131/00 |

The present search report has been drawn up for all claims

| Place of search | Date of completion of the search | Examiner |
|---|---|---|
| BERLIN | 03-12-1985 | KAPTEYN H G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82